# EUROPEAN PATENT APPLICATION

(11) **EP 4 711 401 A1**
(43) Date of publication of application: **18.03.2026**
(21) Application number: 24803433.2
(22) Date of filing: 01.05.2024
(51) Int. Cl.: C08G 77/388, C08G 77/42, C08L 83/10, C09D 183/04

(54) **CYCLIC OLIGOSACCHARIDE-MODIFIED ORGANOPOLYSILOXANE AND FILM-FORMING AGENT**

(30) Priority: 09.05.2023 JP 2023077162
(71) Applicant: SHIN-ETSU CHEMICAL CO., LTD., Tokyo 100-0005 (JP)
(72) Inventor: HATA, Ryunosuke, Tokyo 100-0005 (JP); HASHIMOTO, Ryota, Annaka-shi, Gunma 379-0224 (JP); MORIYA, Hiroyuki, Annaka-shi, Gunma 379-0224 (JP); MATSUKURA, Toshihiko, Tokyo 104-0061 (JP)
(74) Representative: Schicker, Silvia
(86) International application number: PCT/JP2024/016772
(87) International publication number: WO 2024/232321

(57) **Abstract**

The present invention is a cyclic oligosaccharide-modified organopolysiloxane of an addition reaction product of the components (A) and (B). This can provide a cyclic oligosaccharide-modified organopolysiloxane that has a high molecular weight but is soluble in a solvent, and a film-forming agent containing the organopolysiloxane.
(A) organohydrogenpolysiloxane having one or more hydrosilyl groups in one molecule, a kinematic viscosity of 50 mm²/s or more, and a number-average molecular weight of 8,000 or more
(B) a cyclic oligosaccharide derivative having an unsaturated group and represented by formula (1)

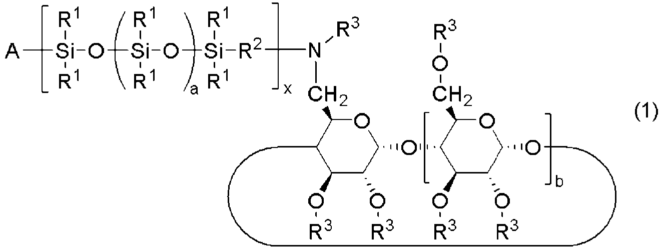

In formula (1), "A" represents an alkenyl group; R¹ represents a group selected from an alkyl group, an aryl group, and an aralkyl group; R² represents an alkylene group; R³ represents a group selected from an alkyl group or an acyl group; "a" represents 0 to 8; "b" represents 5 to 7; and "x" represents 0 or 1.

## Description

### TECHNICAL FIELD

The present invention relates to cyclic oligosaccharide-modified organopolysiloxane and a film-forming agent containing the cyclic oligosaccharide-modified organopolysiloxane.

### BACKGROUND ART

Organopolysiloxane can have a variety of functions by having its terminal or side chain modified with various chemical structures. Meanwhile, it is known that cyclic oligosaccharide has a cavity in its molecular structure, and that the cavity interacts with various compounds. Taking advantage of such characteristics, they are used in industrial fields such as food and cosmetics, and their incorporation into various polymeric materials is being investigated to develop functional materials. In fact, introduction of cyclic oligosaccharide into organopolysiloxane has been investigated, and a gel material crosslinked with cyclic oligosaccharide derivatives has been disclosed (Patent Document 1).

However, because the cyclic oligosaccharide-modified organopolysiloxane is a crosslinked product, it is difficult to dissolve it in a solvent, although it will swell in a solvent. This has limited its application as a film-forming agent or coating material.

Patent Document 2 and Non-Patent Document 1 disclose methods for manufacturing non-crosslinked cyclic oligosaccharide-modified organopolysiloxane using a derivative in which a reactive functional group is bonded to only one hydroxyl group of a cyclic oligosaccharide.

However, generally speaking, because cyclic oligosaccharide has poor compatibility with organopolysiloxane, addition of the cyclic oligosaccharide to high-molecular-weight organopolysiloxane has not been sufficiently investigated. In fact, the number-average molecular weights of the organopolysiloxane used in Patent Document 2 and Non-Patent Document 1 are approximately 1,000 to 7,500, which are relatively low.

### CITATION LIST

### PATENT LITERATURE

Patent Document 1: JP2022-503533A
Patent Document 2: WO2021/172468A1

### NON PATENT LITERATURE

Non Patent Document 1: Ahlem Noomen et al., Emulsions of β-cyclodextrins grafted to silicone for the transport of antifungal drugs, Materials Science and Engineering C, 2008, 28, p. 705-715

### SUMMARY OF INVENTION

### TECHNICAL PROBLEM

The present invention was made in view of the above circumstances and has for its object to provide a cyclic oligosaccharide-modified organopolysiloxane that has a high molecular weight but is soluble in a solvent, and a film-forming agent containing the cyclic oligosaccharide-modified organopolysiloxane.

### SOLUTION TO PROBLEM

To achieve the object above, the present invention provides the following cyclic oligosaccharide-modified organopolysiloxane and a film-forming agent.

That is, the present invention provides a cyclic oligosaccharide-modified organopolysiloxane of an addition reaction product at least between the following components (A) and (B),
(A) organohydrogenpolysiloxane having one or more hydrosilyl groups in one molecule, a kinematic viscosity of 50 mm²/s or more at 25°C, and a number-average molecular weight of 8,000 or more,
(B) a cyclic oligosaccharide derivative having an unsaturated group and represented by the following general formula (1), 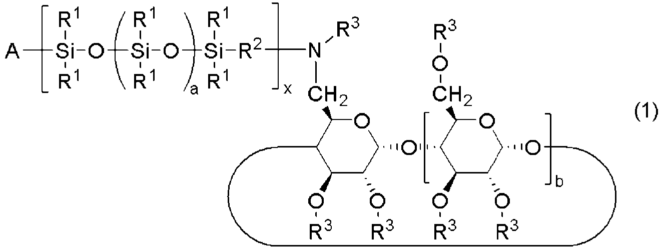 wherein "A" represents an alkenyl group having 2 to 12 carbon atoms; R¹ represents independently a group selected from an alkyl group having 1 to 4 carbon atoms, an aryl group having 6 to 10 carbon atoms, and an aralkyl group having 7 to 10 carbon atoms; R² represents an alkylene group having 1 to 4 carbon atoms; R³ represents independently a group selected from an alkyl group having 1 to 4 carbon atoms or an acyl group having 1 to 4 carbon atoms; "a" represents an integer of 0 to 8; "b" represents an integer of 5 to 7; and "x" represents 0 or 1.

Such an oligosaccharide-modified organopolysiloxane has a high molecular weight but is soluble in a solvent.

In this event, the cyclic oligosaccharide-modified organopolysiloxane is preferably an addition reaction product of α-olefin having 2 to 16 carbon atoms in addition to the components (A) and (B).

Such an oligosaccharide-modified organopolysiloxane has an increased compatibility with a cyclic oligosaccharides.

Further, the present invention provides the cyclic oligosaccharide-modified organopolysiloxane represented by the following general formula (2), 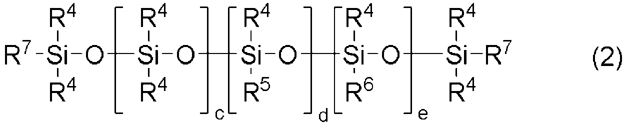 wherein R⁴ represents independently a group selected from an alkyl group having 1 to 4 carbon atoms, an aryl group having 6 to 10 carbon atoms, and an aralkyl group having 7 to 10 carbon atoms; R⁵ represents independently an alkyl group having 5 to 16 carbon atoms; R⁶ represents independently a group having a cyclic oligosaccharide structure represented by the following general formula (3); R⁷ represents independently a group selected from R⁴ or R⁶; "c" represents an integer of 100 to 600, "d" represents an integer of 0 to 50, "e" represents an integer of 1 to 50, and c+d+e satisfies being within the range of 101 to 700; and the bonding of siloxane units enclosed by parentheses, subscripted by "c", "d", or "e", may be block or random in order, 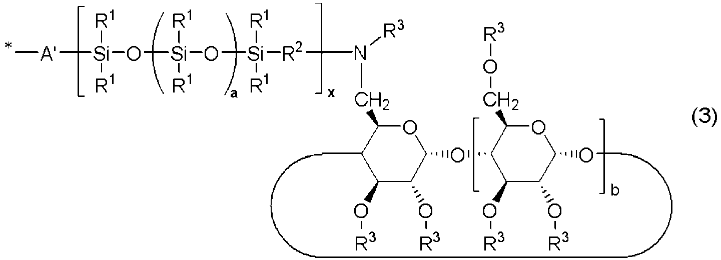 wherein "A' " represents an alkylene group having 2 to 12 carbon atoms, R¹, R², R³, "a", "b", and "x" are the same as defined above, and "*" represents an attachment bonded to a silicon atom of the siloxane units.

In this event, in the general formula (2), it is preferable that R¹ is a methyl group, R³ is an acetyl group, and R⁴ is a methyl group.

Further, in the general formula (2), it is more preferable that "x" is 1. Such a cyclic oligosaccharide-modified organopolysiloxane exhibits the effects of the present invention more certainly.

The present invention can provide the cyclic oligosaccharide-modified organopolysiloxane whose glass transition temperature measured by dynamic viscoelasticity measurement is 50 to 100°C.

The cyclic oligosaccharide-modified organopolysiloxane whose glass transition temperature is 50 to 100°C can have sufficient mechanical properties and flexible film-forming ability at room temperature.

The inventive cyclic oligosaccharide-modified organopolysiloxane can be used as a film-forming agent because it forms a coating film that has high transparency and is flexible, non-sticky, and tough.

### ADVANTAGEOUS EFFECTS OF INVENTION

The inventive oligosaccharide-modified organopolysiloxane has a structure in which cyclic oligosaccharide bonds thereto stably, has a high molecular weight but is soluble in a solvent, and provides a new film-forming agent forming a coating film that has high transparency after evaporation of solvents and is flexible, non-sticky, and tough.

### DESCRIPTION OF EMBODIMENTS

Hereinafter, the present invention will be described in detail, but the present invention is not limited to below.

As a result of their diligent study to achieve the objectives above, the inventors found that cyclic oligosaccharide could be added to organopolysiloxane stably by giving a short alkyl structure or a dimethylsiloxy structure, which had high compatibility with the organopolysiloxane, to the cyclic oligosaccharide. The inventive cyclic oligosaccharide-modified organopolysiloxane can be dissolved uniformly in a solvent thanks to having a specific structure even if having high molecular weight, and it is possible to add as a coating agent for cosmetics and paints. Furthermore, they found that the inventive cyclic oligosaccharide-modified organopolysiloxane formed a coating film that had high transparency after evaporation of solvents and was flexible, non-sticky, and tough, and have completed the present invention.

That is, the inventive cyclic oligosaccharide-modified organopolysiloxane is an addition reaction product at least between the following components (A) and (B),
(A) organohydrogenpolysiloxane having one or more hydrosilyl groups in one molecule, a kinematic viscosity of 50 mm²/s or more at 25°C, and a number-average molecular weight of 8,000 or more,
(B) a cyclic oligosaccharide derivative having an unsaturated group and represented by the following general formula (1), 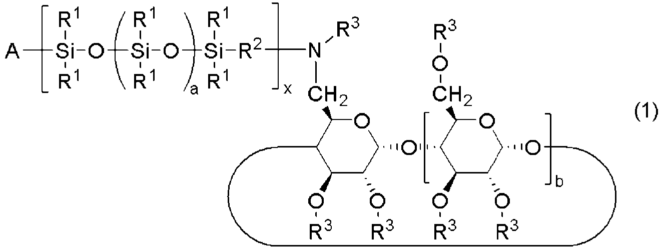 wherein "A" represents an alkenyl group having 2 to 12 carbon atoms; R¹ represents independently a group selected from an alkyl group having 1 to 4 carbon atoms, an aryl group having 6 to 10 carbon atoms, and an aralkyl group having 7 to 10 carbon atoms; R² represents an alkylene group having 1 to 4 carbon atoms; R³ represents independently a group selected from an alkyl group having 1 to 4 carbon atoms or an acyl group having 1 to 4 carbon atoms; "a" represents an integer of 0 to 8; "b" represents an integer of 5 to 7; and "x" represents 0 or 1.

The component (A) above has a kinematic viscosity at 25°C of 50 mm²/s or more, and from the viewpoint of ease of handling, preferably 50 to 25,000 mm²/s, and more preferably 50 to 10,000 mm²/s. Note that in the present invention, the kinematic viscosity is a value measured at 25°C using a Cannon-Fenske viscometer described in JIS Z 8803:2011.

The number-average molecular weight is 8,000 or more, and from the viewpoint of ease of handling, it is preferably 8,000 to 50,000, and more preferably 8,000 to 35,000. The number of hydrosilyl groups contained in one molecule of the organohydrogenpolysiloxane is one or more, and from the viewpoint of the physical properties of the resulting coating film, it is preferable that there are 1 to 40 hydrosilyl groups, and more preferably 1 to 20 hydrosilyl groups. Note that in the present invention, the number-average molecular weight is a value obtained by GPC (gel permeation chromatography) analysis using polystyrene as a standard substance under the following conditions.

### [Measurement Conditions]

Developing solvent: toluene
Flow rate: 0.6 mL/min
Detector: differential refractive index detector (RI)
Column: TSK Guardcolumn Super H-H
   TSKgel Super H5000(6.0 mm I.D. × 15 cm × 1)
   TSKgel Super H4000(6.0 mm I.D. × 15 cm × 1)
   TSKgel Super H3000(6.0 mm I.D. × 15 cm × 1)
   TSKgel Super H2000(6.0 mm I.D. × 15 cm × 1)
   (All columns are made by Tosoh Corporation)
Column temperature: 40°C
Sample injection amount: 50 µL (a toluene solution having a concentration of 0.3 mass%)

In the formula (1) of the component (B) above, "A" represents an alkenyl group having 2 to 12 carbon atoms. From the viewpoint of procuring synthetic materials, "A" is preferably an alkenyl group having 2 to 4 carbon atoms, and more preferably a vinyl group. R¹ represents independently a group selected from an alkyl group having 1 to 4 carbon atoms, an aryl group having 6 to 10 carbon atoms, and an aralkyl group having 7 to 10 carbon atoms. From the viewpoint of procuring synthetic materials, R¹ is preferably a methyl group or an ethyl group, more preferably a methyl group. R² represents an alkylene group having 1 to 4 carbon atoms. From the viewpoint of procurement of synthetic materials, R² is preferably an alkylene group having 2 to 3 carbon atoms, more preferably a propylene group. R³ represents independently a group selected from an alkyl group having 1 to 4 carbon atoms or an acyl group having 1 to 4 carbon atoms. From the viewpoint of reaction conditions, R³ is preferably an acyl group having 1 to 4 carbon atoms, more preferably an acetyl group. "a" represents an integer of 0 to 8. From the viewpoint of procuring synthetic materials, "a" is preferably 0 to 2, more preferably 0. "b" represents an integer of 5 to 7. "x" represents 0 or 1, and is preferably 1 because this results in excellent compatibility with the component (A).

In addition to the above components (A) and (B), the inventive cyclic oligosaccharide-modified organopolysiloxane can also have an α-olefin (C) having 2 to 16 carbon atoms added thereto. From the viewpoint of compatibility with the cyclic oligosaccharide, the α-olefin having 2 to 16 carbon atoms is preferably an alkyl group having 5 to 8 carbon atoms, more preferably an octyl group. The ratio of (A) to (B) is preferably such that the amount of the alkenyl groups in the cyclic oligosaccharide derivative (B) is preferably 0.8 to 1.2 moles relative to 1 mole of the hydrosilyl groups in the organohydrogenpolysiloxane (A). When the component (C) is also contained, it is preferable that the amount of the alkenyl groups in the cyclic oligosaccharide derivative (B) is preferably 0.02 to 1.2 moles and the amount of alkenyl groups in the α-olefin (C) is preferably 0.02 to 1.98 relative to 1 mole of the hydrosilyl groups in the organohydrogenpolysiloxane (A), provided that the total amount of the components (B) and (C) is within the range of 0.8 to 2.0 moles relative to 1 mole of the hydrosilyl groups in the above component (A).

The addition reaction is preferably performed in the presence of a platinum or rhodium catalyst. Specifically, catalysts such as chloroplatinic acid, alcohol-modified chloroplatinic acid, and chloroplatinic acid-vinylsiloxane complexes are preferably used. The amount of catalyst used may be a catalytic amount, but from the viewpoint of the appearance of the cyclic oligosaccharide-modified organopolysiloxane, the amount of the platinum or the rhodium is preferably 100 ppm or less, and particularly preferably 50 ppm or less.

The addition reaction above may be performed in an organic solvent, as needed. Examples of the organic solvents include aliphatic alcohols, such as methanol, ethanol, 2-propanol, and butanol; aromatic hydrocarbons, such as toluene and xylene; aliphatic or alicyclic hydrocarbons, such as n-pentane, n-hexane, and cyclohexane; and halogenated hydrocarbons, such as dichloromethane, chloroform, and carbon tetrachloride. Among these, toluene is preferable from the viewpoint of compatibility with materials.

The addition reaction conditions are not particularly limited, but it is preferable to perform the reaction at 70 to 110°C for 1 to 10 hours.

The cyclic oligosaccharide-modified organopolysiloxane obtained by the addition reaction of the components (A), (B), and (C) is preferably represented by the following general formula (2), 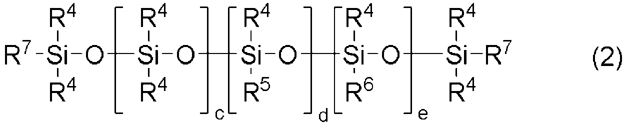 wherein R⁴ represents independently a group selected from an alkyl group having 1 to 4 carbon atoms, an aryl group having 6 to 10 carbon atoms, and an aralkyl group having 7 to 10 carbon atoms; R⁵ represents independently an alkyl group having 5 to 16 carbon atoms; R⁶ represents independently a group having a cyclic oligosaccharide structure represented by the following general formula (3); R⁷ represents independently a group selected from R⁴ or R⁶; "c" represents an integer of 100 to 600, "d" represents an integer of 0 to 50, "e" represents an integer of 1 to 50, and c+d+e satisfies being within the range of 101 to 700; and the bonding of siloxane units enclosed by parentheses, subscripted by "c", "d", or "e", may be block or random in order, 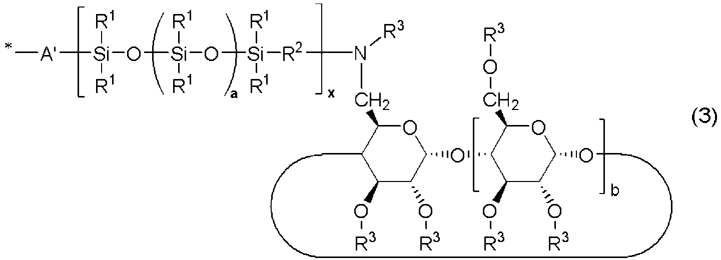 wherein "A'" represents an alkylene group having 2 to 12 carbon atoms, R¹, R², R³, "a", "b", and "x" are the same as defined above, and "*" represents an attachment bonded to a silicon atom of the siloxane units.

In the formula (2), R⁴ represents independently a group selected from an alkyl group having 1 to 4 carbon atoms, an aryl group having 6 to 10 carbon atoms, and an aralkyl group having 7 to 10 carbon atoms. From the viewpoint of compatibility with the cyclic oligosaccharide, R⁴ is preferably a methyl group or an ethyl group, and more preferably a methyl group. R⁵ represents independently an alkyl group having 5 to 16 carbon atoms, and from the viewpoint of compatibility with the cyclic oligosaccharide, R⁵ is preferably an alkyl group having 5 to 8 carbon atoms, more preferably an octyl group. "c" represents an integer of 100 to 600, and from the viewpoint of the physical properties of the coating film, it is preferably 300 to 600, more preferably 400 to 500. "d" represents an integer of 0 to 50, and from the viewpoint of the physical properties of the coating film, it is preferably 0 to 20, more preferably 0 to 10. "e" represents an integer of 1 to 50, and from the viewpoint of the physical properties of the coating film, it is preferably 1 to 20, more preferably 1 to 10. Furthermore, c+d+e satisfies being within the range of 101 to 700, and is preferably within the range of 300 to 600. Furthermore, R⁶ represents independently a group having a cyclic oligosaccharide structure represented by the formula (3), in which "A'" represents an alkylene group having 2 to 12 carbon atoms, preferably an alkylene group having 2 to 4 carbon atoms, and more preferably an ethylene group having 2 carbon atoms. R⁷ represents independently a group selected from R⁴ or R⁶.

The glass transition temperature of the cyclic oligosaccharide-modified organopolysiloxane obtained in this manner is preferably 50 to 100°C. From the viewpoint of the properties of the coating film to be formed, it is more preferably 60 to 95°C, further preferably 65 to 90° C. When it is within the above range, a flexible coating film is formed with having sufficient mechanical properties at room temperature.

Note that the glass transition temperature in the present invention is a value determined by dynamic viscoelasticity measurement under the conditions shown in the examples described later.

### [Film-Forming Agent]

The inventive cyclic oligosaccharide-modified organopolysiloxane forms a coating film that has high transparency and is flexible, non-sticky, and tough, and therefore can be used as a film-forming agent.

As the film-forming agent, the cyclic oligosaccharide-modified organopolysiloxane can be used alone, but from the viewpoints of film-forming properties and workability, it is preferable to use it after diluting it with an organic solvent.

The organic solvent is selected from volatile siloxanes, saturated aliphatic hydrocarbons, saturated alicyclic hydrocarbons, aromatic hydrocarbons, chlorinated hydrocarbons, chlorofluorohydrocarbons, alcohols, etc. Particularly preferable organic solvents are volatile organosiloxanes and light liquid isoparaffins having a boiling point of 100 to 270°C at normal pressure (1013 hPa). Examples of the volatile organosiloxanes include cyclic siloxanes, such as hexamethylcyclotrisiloxane, octamethylcyclotetrasiloxane, decamethylcyclopentasiloxane, dodecamethylcyclohexasiloxane, trimethyltriethylcyclotrisiloxane, hexaethyltricyclosiloxane, diethyltetramethylcyclotrisiloxane, dimethyltetraethylcyclotrisiloxane, diethylhexamethylcyclotetrasiloxane, and tetraethyltetramethylcyclotetrasiloxane; linear siloxanes, such as hexamethyldisiloxane, octamethyltrisiloxane, decamethyltetrasiloxane, dodecamethylpentasiloxane, hexaethyldisiloxane, and octaethyltrisiloxane; and branched siloxanes, such as methyltris(trimethylsiloxy)silane and phenyltris(trimethylsiloxy)silane. The light liquid isoparaffin is exemplified by those contain isoparaffin having 8 to 16 carbon atoms as the main component.

When an organic solvent is used, the amount of the cyclic oligosaccharide-modified organopolysiloxane is preferably 0.1 to 80%, more preferably 0.5 to 20%.

As the coating method, a publicly known method can be adopted depending on the type of substrate to be coated.

Intended uses of the film-forming agent of the inventive cyclic oligosaccharide-modified organopolysiloxane include cosmetics; paints; a damage-preventing agent, a water repellent, or a release agent for paper, a plastic sheet, or a rubber article; a damage-preventing agent, a water repellent, a waterproofing agent, a feel-improver, or a filling agent for cloth; and a water repellent, a waterproofing agent, or a release agent for concrete, mortar, or wood. It can be used to impart properties such as makeup durability, slip resistance, and water repellency.

### EXAMPLE

Hereinafter, the present invention will be specifically described with reference to Examples, but the present invention is not limited thereto.

### [Measuring Methods]

The various measurements were performed according to the following methods.

### < Glass Transition Temperature>

The glass transition temperature is obtained by analyzing dynamic viscoelasticity data obtained by measuring a 0.25 mm thick film, which was prepared before the measurement, using a Hitachi High-Tech Science "DMA7100" in a tension mode at a frequency of 1 Hz in the range of 25 to 120°C at a heating rate of 5°C/min. The temperature at which tan δ (loss tangent), which is expressed as a ratio of E" (loss modulus) to E' (storage modulus), becomes maximum is identified, and this temperature is defined as the glass transition temperature.

### <1H-NMR>

Measurements were performed using an AVANCE-III 400 MHz (manufactured by BRUKER) using deuterated chloroform as a measurement solvent.

### [Synthesis Example 1: Synthesis of Cyclic Oligosaccharide Derivative Having Unsaturated Bonding]

A four-neck flask equipped with a stirrer, a thermometer, a reflux condenser, and a dropping funnel was charged with 50.0 g of mono-6-O-(p-toluenesulfonyl)-β-cyclodextrin (C6-Ts-β-CD) and 500.0 g of allylamine. After replacing the atmosphere in the flask with nitrogen, the mixture was stirred at 53°C for 7 hours, cooled to room temperature, and stirred overnight. The mixture was concentrated using an evaporator, and the resulting solid was added with 1,000 mL of acetonitrile, and the sediment was collected by filtration. The resulting sediment was added with 1,000 mL of distilled water to be dissolved, and the resulting solution was added dropwise to 1,000 mL of acetonitrile, and the sediment was collected by filtration. The sediment was washed with acetone and then dried in a vacuum dryer at 40°C to obtain a vinyl-modified compound A (white solid, 42.7 g).

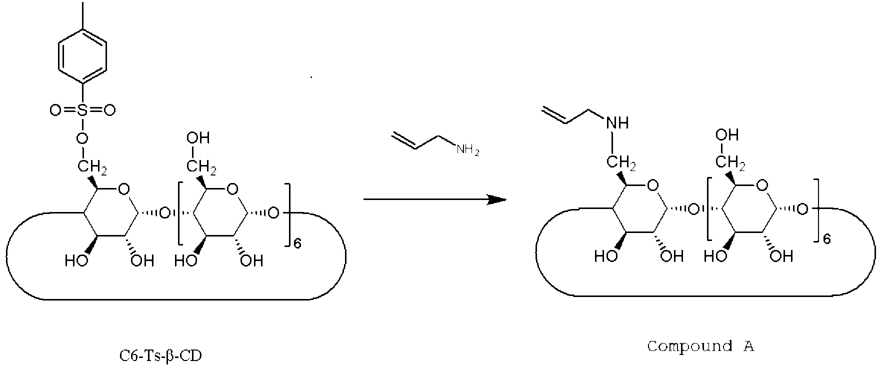

### [Synthesis Example 2: Synthesis of Cyclic Oligosaccharide Derivative Having Unsaturated Bonding]

A four-neck flask equipped with a stirrer, a thermometer, a reflux condenser, and a dropping funnel was charged with 30.0 g of the vinyl-modified compound A, 110.0 g of acetic anhydride, and 170.0 g of pyridine. After replacing the atmosphere in the flask with nitrogen, the mixture was stirred at 60°C for 7 hours, cooled to room temperature, and stirred overnight. The solution in the flask was added with 170 mL of toluene and was washed twice with 170 mL of 1 mM hydrochloric acid and once with 170 mL of a saturated salt solution. The solution obtained by liquid separation was concentrated using an evaporator. The collected solid was dissolved in 50 mL of acetone. The resulting solution was added dropwise to 500 mL of distilled water, and the sediment was collected by filtration. The sediment was dried in a vacuum dryer at 40°C to obtain a vinyl-modified compound B (white solid, 31.8 g).

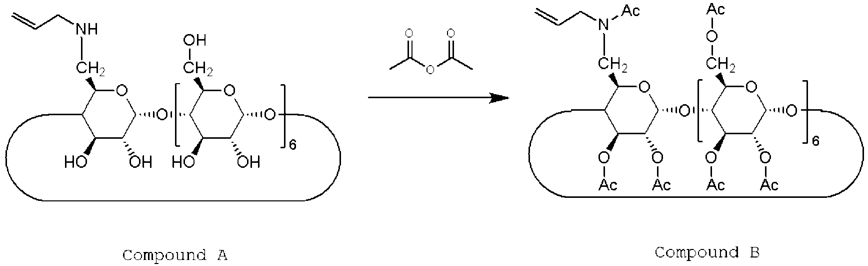

### [Synthesis Example 3: Synthesis of Cyclic Oligosaccharide Derivative Having Unsaturated Bonding]

A four-neck flask equipped with a stirrer, a thermometer, a reflux condenser, and a dropping funnel was charged with 48.0 g of mono-6-O-(p-toluenesulfonyl)-β-cyclodextrin (C6-Ts-β-CD), 300.0 g of 1-vinyl,3-(3-aminopropyl)tetramethyldisiloxane, and 60.0 g of N,N-dimethylformamide. After replacing the atmosphere in the flask with nitrogen, the mixture was stirred at 75°C for 7 hours, cooled to room temperature, and stirred overnight. The solution in the flask was added dropwise to 1,200 mL of acetonitrile, and the sediment was collected by filtration. The resulting sediment was added with 60.0 g of N,N-dimethylformamide and dissolved therein. The resulting solution was added dropwise to 1,200 mL of toluene, and the sediment was collected by filtration. The sediment was washed with acetone and then dried in a vacuum dryer at 40°C to obtain a vinyl-modified compound C (white solid, 42.5 g).

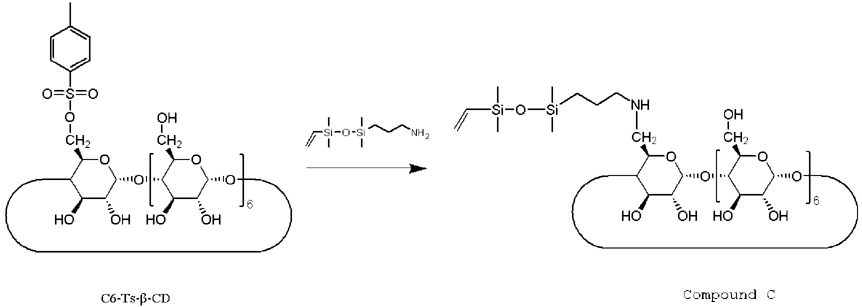

### [Synthesis Example 4: Synthesis of Cyclic Oligosaccharide Derivative Having Unsaturated Bonding]

A four-neck flask equipped with a stirrer, a thermometer, a reflux condenser, and a dropping funnel was charged with 42.0 g of the vinyl-modified compound C, 134.4 g of acetic anhydride, and 210.0 g of pyridine. After replacing the atmosphere in the flask with nitrogen, the mixture was stirred at 60°C for 7 hours, cooled to room temperature, and stirred overnight. The solution in the flask was added with 210 mL of toluene, and was washed twice with 210 mL of 1 mM hydrochloric acid and once with 210 mL of a saturated salt solution. The solution obtained by liquid separation was concentrated using an evaporator. The collected solid was dissolved in 150 mL of toluene. The resulting solution was added dropwise to 300 mL of hexane, and the sediment was collected by filtration. The sediment was dried in a vacuum dryer at 40°C to obtain a vinyl-modified compound D (white solid, 50.1 g).

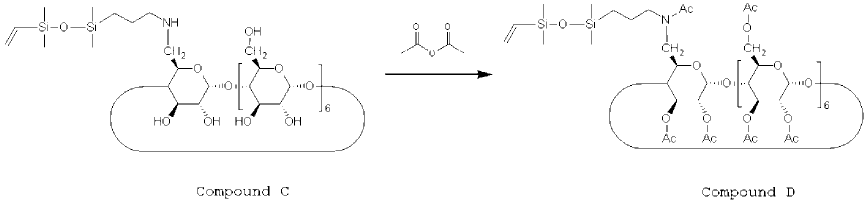

### [Example 1]

A four-neck flask equipped with a stirrer, a thermometer, a reflux condenser, and a dropping funnel was charged with 100.0 g of polyorganohydrogensiloxane represented by the following formula (4) (hydrosilyl group amount: 0.040 mol, kinematic viscosity at 25°C: 3,340 mm²/s, number-average molecular weight: 31,100), 24.9 g of the vinyl-modified compound B (vinyl group amount: 0.012 mol), and 200.0 g of toluene. After replacing the atmosphere in the flask with nitrogen, temperature of the mixture was increased to 90°C, the flask was added with 1.3 g of a toluene solution (platinum concentration: 0.5 wt%) of platinum-1,3-divinyl-1,1,3,3-tetramethyldisiloxane complex, and the mixture was stirred at 90°C for 4 hours. Here, the progress of the reaction was confirmed by checking disappearance of the vinyl group peak (5.6 to 6.1 ppm) by ¹H-NMR. 6.4 g (0.057 mol) of 1-octene and 0.7 g of a toluene solution (platinum concentration: 0.5 wt%) of platinum-1,3-divinyl-1,1,3,3-tetramethyldisiloxane complex were then added to the flask and the mixture was stirred at 90°C for 4 hours. The reaction solution was then cooled to room temperature, and the toluene was removed under reduced pressure using an evaporator. 250 g of methanol was added to the resulting solid, and the solid was washed at 50°C. This washing process was repeated three times. Finally, the solid was dried in a vacuum dryer at 40°C to obtain cyclic oligosaccharide-modified organopolysiloxane E (light brown solid, 119.7 g).

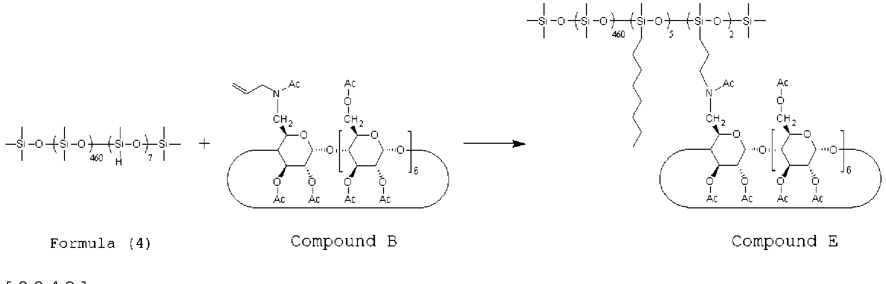

### [Example 2]

A four-neck flask equipped with a stirrer, a thermometer, a reflux condenser, and a dropping funnel was charged with 128.3 g of polyorganohydrogensiloxane (hydrosilyl group amount: 0.052 mol, kinematic viscosity at 25°C: 3,340 mm²/s, number-average molecular weight: 31,100) represented by the following formula (4), 45.0 g of the vinyl-modified compound D (vinyl group amount: 0.016 mol), and 256.0 g of toluene. After replacing the atmosphere in the flask with nitrogen, temperature of the mixture was increased to 90°C, the flask was added with 1.7 g of a toluene solution (platinum concentration: 0.5 wt%) of platinum-1,3-divinyl-1,1,3,3-tetramethyldisiloxane complex, and the mixture was stirred at 90°C for 2 hours. Here, the progress of the reaction was confirmed by checking disappearance of the vinyl group peak (5.6 to 6.1 ppm) by ¹H-NMR. 8.2 g (0.073 mol) of 1-octene and 0.9 g of a toluene solution (platinum concentration: 0.5 wt%) of platinum-1,3-divinyl-1,1,3,3-tetramethyldisiloxane complex were then added to the flask, and the mixture was stirred at 90°C for 4 hours. The reaction solution was then cooled to room temperature, and the toluene was removed under reduced pressure using an evaporator. 300 g of methanol was added to the resulting solid, and the solid was washed at 50°C. This washing process was repeated three times. Finally, the solid was dried in a vacuum dryer at 40°C to obtain cyclic oligosaccharide-modified organopolysiloxane F (light brown solid, 148.3 g).

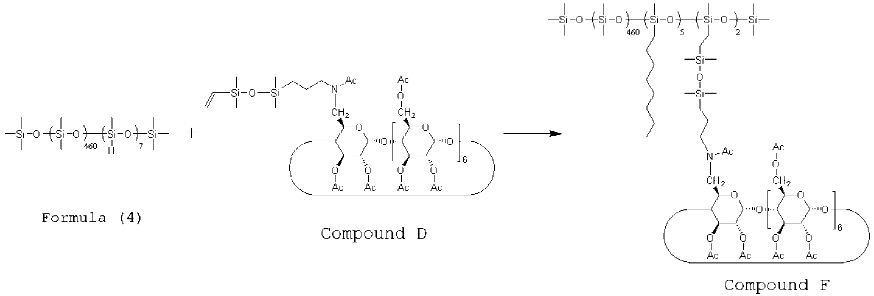

### [Example 3]

A four-neck flask equipped with a stirrer, a thermometer, a reflux condenser, and a dropping funnel was charged with 77.0 g of polyorganohydrogensiloxane (hydrosilyl group amount: 0.031 mol, kinematic viscosity at 25°C: 3,340 mm²/s, number-average molecular weight: 31,100) represented by the following formula (4), 45.0 g of the vinyl-modified compound D (vinyl group amount: 0.016 mol), and 154.0 g of toluene. After replacing the atmosphere in the flask with nitrogen, temperature of the mixture was increased to 90°C, the flask was added with 1.1 g of a toluene solution (platinum concentration: 0.5 wt%) of platinum-1,3-divinyl-1,1,3,3-tetramethyldisiloxane complex, and the mixture was stirred at 90°C for 2 hours. Here, the progress of the reaction was confirmed by checking disappearance of the vinyl group peak (5.6 to 6.1 ppm) by ¹H-NMR. 3.5 g (0.031 mol) of 1-octene and 0.6 g of a toluene solution (platinum concentration: 0.5 wt%) of platinum-1,3-divinyl-1,1,3,3-tetramethyldisiloxane complex were then added to the flask and the mixture was stirred at 90°C for 4 hours. The reaction solution was then cooled to room temperature, and the toluene was removed under reduced pressure using an evaporator. 240 g of methanol was added to the resulting solid, and the solid was washed at 50°C. This washing process was repeated three times. Finally, the solid was dried in a vacuum dryer at 40°C to obtain cyclic oligosaccharide-modified organopolysiloxane G (light brown solid, 113.3 g).

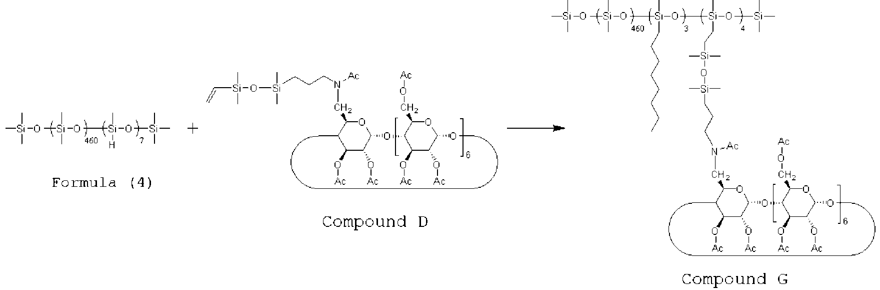

### [Example 4]

A four-neck flask equipped with a stirrer, a thermometer, a reflux condenser, and a dropping funnel was charged with 35.0 g of polyorganohydrogensiloxane (hydrosilyl group amount: 0.014 mol, kinematic viscosity at 25°C: 3,340 mm²/s, number-average molecular weight: 31,100) represented by the following formula (4), 45.0 g of the vinyl-modified compound D (vinyl group amount: 0.016 mol), and 70.0 g of toluene. After replacing the atmosphere in the flask with nitrogen, temperature of the mixture was increased to 90°C, the flask was added with 0.6 g of a toluene solution (platinum concentration: 0.5 wt%) of platinum-1,3-divinyl-1,1,3,3-tetramethyldisiloxane complex, and the mixture was stirred at 90°C for 2 hours. Here, the progress of the reaction was confirmed by checking disappearance of the vinyl group peak (5.6 to 6.1 ppm) by ¹H-NMR. The reaction solution was then cooled to room temperature, and the toluene was removed under reduced pressure using an evaporator. 140 g of methanol was added to the resulting solid, and the solid was washed at 50°C. This washing process was repeated three times. Finally, the solid was dried in a vacuum dryer at 40°C to obtain cyclic oligosaccharide-modified organopolysiloxane H (light brown solid, 64.3 g).

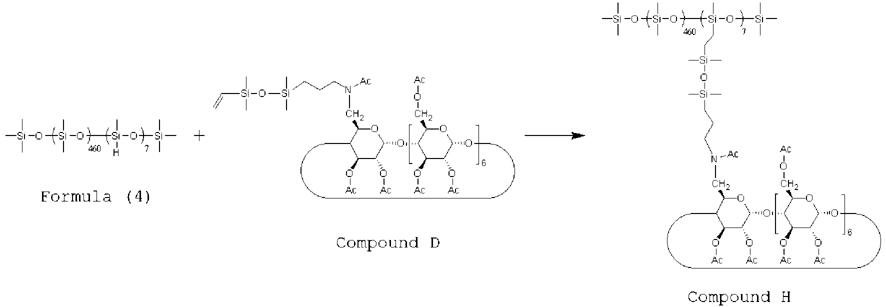

### [Comparative Example 1]

A four-neck flask equipped with a stirrer, a thermometer, a reflux condenser, and a dropping funnel was charged with 6.9 g of polyorganohydrogensiloxane (hydrosilyl group amount: 0.052 mol, kinematic viscosity at 25°C: 17 mm²/s, number-average molecular weight: 3,000) represented by the following formula (5), 45.0 g of the vinyl-modified compound D (vinyl group amount: 0.016 mol), and 100.0 g of toluene. After replacing the atmosphere in the flask with nitrogen, temperature of the mixture was increased to 90°C, the flask was added with 0.6 g of a toluene solution (platinum concentration: 0.5 wt%) of platinum-1,3-divinyl-1,1,3,3-tetramethyldisiloxane complex, and the mixture was stirred at 90°C for 2 hours. Here, the progress of the reaction was confirmed by checking disappearance of the vinyl group peak (5.6 to 6.1 ppm) by ¹H-NMR. 8.2 g (0.073 mol) of 1-octene and 0.3 g of a toluene solution (platinum concentration: 0.5 wt%) of platinum-1,3-divinyl-1,1,3,3-tetramethyldisiloxane complex were then added to the flask and the mixture was stirred at 90°C for 4 hours. The reaction solution was then cooled to room temperature, and the toluene was removed under reduced pressure using an evaporator. 100 g of methanol was added to the resulting solid, and the solid was washed at 50°C. This washing process was repeated three times. Finally, the solid was dried in a vacuum dryer at 40°C to obtain cyclic oligosaccharide-modified organopolysiloxane I (light brown solid, 44.6 g).

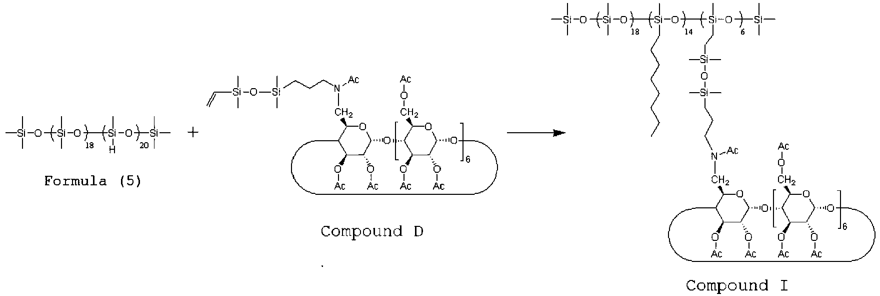

Films were prepared from the compounds obtained in the above Examples and Comparative Example by the following methods, and various evaluations of the prepared films were performed.

### [Preparation of Coating Film]

The various cyclic oligosaccharide-modified organopolysiloxanes obtained in the above-mentioned Synthesis Examples, Examples, and Comparative Example were dissolved in toluene to prepare 30% solutions. The solution was poured onto a Teflon^{®}-coated plate having a mold with a 5 cm length, 5 cm width, and 0.25 mm thickness, left overnight at 25°C, and then dried in a dryer at 80°C for 1 hour to produce a coating film. The appearance of the resulting coating film was visually observed, and the presence or absence of stickiness was examined by touch. In addition, dynamic viscoelasticity measurement was performed to determine the glass transition temperature.

**[Table 1]**

| | Transparency | Stickiness | Glass transition temperature |
|---|---|---|---|
| Example 1 | Transparent | None | 66°C |
| Example 2 | Transparent | None | 73°C |
| Example 3 | Transparent | None | 75°C |
| Example 4 | Transparent | None | 89°C |
| Comparative Example 1 | Transparent | None | 120°C or higher |

The results in Table 1 revealed that the inventive cyclic oligosaccharide-modified organopolysiloxane had a high molecular weight but was soluble in a solvent, and could form a coating film that was transparent, non-sticky, flexible, and tough. On the other hand, the comparative example had a low molecular weight and lacked flexibility and toughness.

The present description includes the following embodiments.
[1]: A cyclic oligosaccharide-modified organopolysiloxane of an addition reaction product at least between the following components (A) and (B),
   (A) organohydrogenpolysiloxane having one or more hydrosilyl groups in one molecule, a kinematic viscosity of 50 mm²/s or more at 25°C, and a number-average molecular weight of 8,000 or more,
   (B) a cyclic oligosaccharide derivative having an unsaturated group and represented by the following general formula (1), 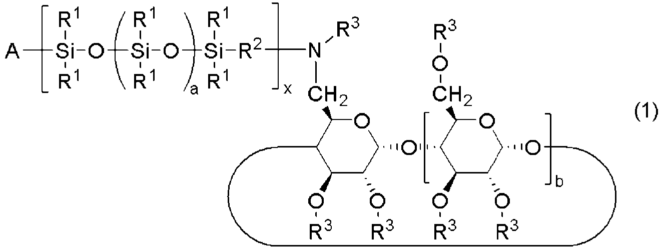 wherein "A" represents an alkenyl group having 2 to 12 carbon atoms; R¹ represents independently a group selected from an alkyl group having 1 to 4 carbon atoms, an aryl group having 6 to 10 carbon atoms, and an aralkyl group having 7 to 10 carbon atoms; R² represents an alkylene group having 1 to 4 carbon atoms; R³ represents independently a group selected from an alkyl group having 1 to 4 carbon atoms or an acyl group having 1 to 4 carbon atoms; "a" represents an integer of 0 to 8; "b" represents an integer of 5 to 7; and "x" represents 0 or 1.
[2] The cyclic oligosaccharide-modified organopolysiloxane of the above [1],
   wherein the cyclic oligosaccharide-modified organopolysiloxane is an addition reaction product of α-olefin having 2 to 16 carbon atoms in addition to the components (A) and (B).
[3] The cyclic oligosaccharide-modified organopolysiloxane of the above [2],
   wherein the cyclic oligosaccharide-modified organopolysiloxane is represented by the following general formula (2), 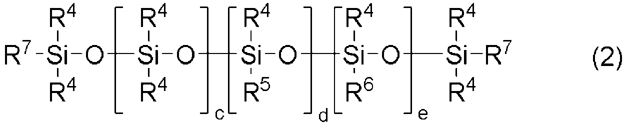
   wherein R⁴ represents independently a group selected from an alkyl group having 1 to 4 carbon atoms, an aryl group having 6 to 10 carbon atoms, and an aralkyl group having 7 to 10 carbon atoms; R⁵ represents independently an alkyl group having 5 to 16 carbon atoms; R⁶ represents independently a group having a cyclic oligosaccharide structure represented by the following general formula (3); R⁷ represents independently a group selected from R⁴ or R⁶; "c" represents an integer of 100 to 600, "d" represents an integer of 0 to 50, "e" represents an integer of 1 to 50, and c+d+e satisfies being within the range of 101 to 700; and the bonding of siloxane units enclosed by parentheses, subscripted by "c", "d", or "e", may be block or random in order, 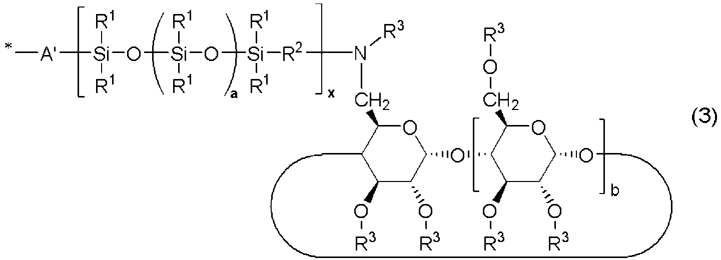
   wherein "A' " represents an alkylene group having 2 to 12 carbon atoms, R¹, R², R³, "a", "b", and "x" are the same as defined above, and "*" represents an attachment bonded to a silicon atom of the siloxane units.
[4] The cyclic oligosaccharide-modified organopolysiloxane of the above [3],
   wherein, in the general formula (2), R¹ is a methyl group, R³ is an acetyl group, and R⁴ is a methyl group.
[5] The cyclic oligosaccharide-modified organopolysiloxane of the above [3] or [4],
   Wherein, in the general formula (2), "x" is 1.
[6] The cyclic oligosaccharide-modified organopolysiloxane of any one of the above [1] to [5],
   wherein, the glass transition temperature measured by dynamic viscoelasticity measurement is 50 to 100°C.
[7] A film-forming agent comprising the cyclic oligosaccharide-modified organopolysiloxane of any one of the above [1] to [6].

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A cyclic oligosaccharide-modified organopolysiloxane of an addition reaction product at least between the following components (A) and (B),
(A) organohydrogenpolysiloxane having one or more hydrosilyl groups in one molecule, a kinematic viscosity of 50 mm²/s or more at 25°C, and a number-average molecular weight of 8,000 or more,
(B) a cyclic oligosaccharide derivative having an unsaturated group and represented by the following general formula (1), 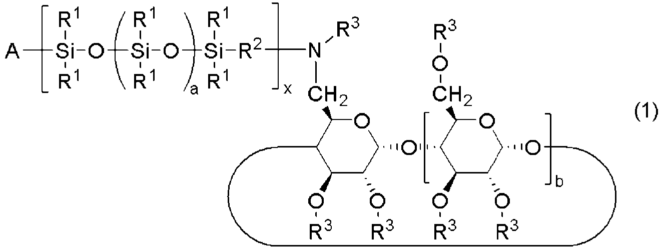 wherein "A" represents an alkenyl group having 2 to 12 carbon atoms; R¹ represents independently a group selected from an alkyl group having 1 to 4 carbon atoms, an aryl group having 6 to 10 carbon atoms, and an aralkyl group having 7 to 10 carbon atoms; R² represents an alkylene group having 1 to 4 carbon atoms; R³ represents independently a group selected from an alkyl group having 1 to 4 carbon atoms or an acyl group having 1 to 4 carbon atoms; "a" represents an integer of 0 to 8; "b" represents an integer of 5 to 7; and "x" represents 0 or 1.

2. The cyclic oligosaccharide-modified organopolysiloxane according to claim 1,
wherein the cyclic oligosaccharide-modified organopolysiloxane is an addition reaction product of α-olefin having 2 to 16 carbon atoms in addition to the components (A) and (B).

3. The cyclic oligosaccharide-modified organopolysiloxane according to claim 2,
wherein the cyclic oligosaccharide-modified organopolysiloxane is represented by the following general formula (2), 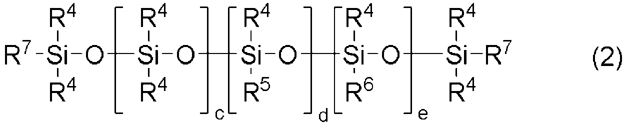
wherein R⁴ represents independently a group selected from an alkyl group having 1 to 4 carbon atoms, an aryl group having 6 to 10 carbon atoms, and an aralkyl group having 7 to 10 carbon atoms; R⁵ represents independently an alkyl group having 5 to 16 carbon atoms; R⁶ represents independently a group having a cyclic oligosaccharide structure represented by the following general formula (3); R⁷ represents independently a group selected from R⁴ or R⁶; "c" represents an integer of 100 to 600, "d" represents an integer of 0 to 50, "e" represents an integer of 1 to 50, and c+d+e satisfies being within the range of 101 to 700; and the bonding of siloxane units enclosed by parentheses, subscripted by "c", "d", or "e", may be block or random in order, 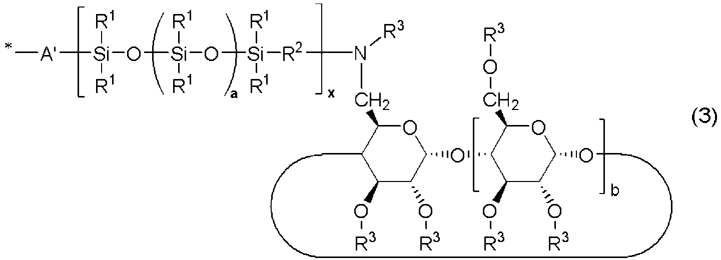
wherein "A'" represents an alkylene group having 2 to 12 carbon atoms, R¹, R², R³, "a", "b", and "x" are the same as defined above, and "*" represents an attachment bonded to a silicon atom of the siloxane units.

4. The cyclic oligosaccharide-modified organopolysiloxane according to claim 3,
wherein, in the general formula (2), R¹ is a methyl group, R³ is an acetyl group, and R⁴ is a methyl group.

5. The cyclic oligosaccharide-modified organopolysiloxane according to claim 4,
Wherein, in the general formula (2), "x" is 1.

6. The cyclic oligosaccharide-modified organopolysiloxane according to claim 1,
wherein, the glass transition temperature measured by dynamic viscoelasticity measurement is 50 to 100°C.

7. A film-forming agent comprising the cyclic oligosaccharide-modified organopolysiloxane according to claim 6.
